# EUROPEAN PATENT APPLICATION

(11) **EP 4 819 238 A1**
(43) Date of publication of application: **07.10.2026**
(21) Application number: 26169214.9
(22) Date of filing: 30.03.2026
(51) Int. Cl.: H01M 4/38, H01M 10/052, H01M 10/0565

(54) **GEL POLYMER ELECTROLYTE COMPOSITION FOR LITHIUM METAL BATTERIES, GEL POLYMER ELECTROLYTE FOR LITHIUM METAL BATTERIES, AND LITHIUM METAL BATTERIES INCLUDING THE SAME**

(30) Priority: 01.04.2025 KR 20250042443; 24.11.2025 KR 20250179996
(71) Applicant: SK On Co., Ltd., Seoul 03161 (KR); Industry-University Cooperation Foundation Hanyang University, Seoul 04763 (KR)
(72) Inventor: HWANG, Hye Su, 34124 Daejeon (KR); PARK, Seong Jin, 34124 Daejeon (KR); KIM, Dong Won, 06219 Seoul (KR); OH, Myung Keun, 04764 Seoul (KR); SIM, Hui Tae, 02622 Seoul (KR); KIM, Chae Young, 04761 Seoul (KR)
(74) Representative: Prüfer & Partner mbB Patentanwälte · Rechtsanwälte

(57) **Abstract**

A gel polymer electrolyte composition for lithium metal batteries according to embodiments of the present disclosure includes a compound including one or more ether groups and four or more acrylate groups, a fluorinated organic solvent, and a lithium salt. Accordingly, ionic conductivity and stability of a lithium metal battery may be improved.

## Description

### [BACKGROUND OF THE INVENTION]

### 1. Field of the Invention

The present disclosure relates to a gel polymer electrolyte composition for lithium metal batteries, a gel polymer electrolyte, and a lithium metal battery including the gel polymer electrolyte.

### 2. Description of the Related Art

Recently, due to global warming caused by increasing carbon dioxide emissions, environmental regulations aimed at achieving carbon neutrality goals are being strengthened worldwide. Accordingly, the use of internal combustion engine vehicles is being restricted, and many companies and research institutes are focusing on the development of electric vehicles. In addition, the importance of secondary batteries that determine the performance (energy density, cycle life characteristics, safety, etc.) of electric vehicles is increasing. However, the energy density of currently commercialized liquid electrolyte-based lithium secondary batteries has reached a practical limit, and, from a commercial perspective, the use of flammable liquid electrolytes raises the risk of fire and explosion due to their high ignition potential. To address these energy density and safety issues, gel polymer electrolytes, which are quasi-solid electrolytes, have attracted considerable attention. However, most gel polymer electrolytes exhibit significantly lower ionic conductivity at room temperature than liquid electrolytes, which makes practical application difficult. Gel polymer electrolytes are typically manufactured as chemically thermally crosslinked types and physical gel polymer electrolytes. Among these, chemically thermally crosslinked gel polymer electrolytes allow functional groups and crosslinking density to be controlled through selection of a crosslinking agent, thereby securing ionic conductivity comparable to that of the liquid electrolytes. When the functional groups of the gel polymer electrolyte are controlled by appropriate selection of the crosslinking agent, an advantage is provided in that a lithium solvation structure present in the liquid electrolyte may be modified, thereby altering film components formed on cathode and anode surfaces during battery operation.

However, when a gel polymer electrolyte designed to induce stable film formation is applied to a lithium metal battery, an inevitable inverse relationship is formed between ionic conductive properties of the electrolyte and the ability to induce stable film formation, which may result in inferior cycle life characteristics and capacity performance compared to a battery employing a liquid electrolyte. Therefore, in order to simultaneously address energy density and safety issues of the lithium metal battery, development of a gel polymer electrolyte capable of inducing stable film formation while securing ionic conductivity comparable to that of the liquid electrolyte is required.

### [SUMMARY OF THE INVENTION]

An object of the present disclosure is to provide a gel polymer electrolyte composition and a gel polymer electrolyte having improved ionic conductivity and stability.

Another object of the present disclosure is to provide a lithium metal battery exhibiting improved ionic conductivity and stability.

A gel polymer electrolyte composition for lithium metal batteries according to the present disclosure includes: a compound including one or more ether groups and four or more acrylate groups; a fluorinated organic solvent; and a lithium salt.

In exemplary embodiments, the compound including one or more ether groups and four or more acrylate groups may include at least one of dipentaerythritol hexaacrylate (DPHA) and dipentaerythritol pentaacrylate (DPPA).

In exemplary embodiments, the compound including one or more ether groups and four or more acrylate groups may be dipentaerythritol hexaacrylate (DPHA).

In exemplary embodiments, the fluorinated organic solvent may include at least one selected from the group consisting of fluoroethylene carbonate (FEC), methyl-2,2,2-trifluoroethyl carbonate (FEMC), trifluorotoluene (TFT), 1,1,2,2-tetrafluoroethyl 2,2,3,3-tetrafluoropropyl ether (TTE), and difluorobenzene (DFB).

In exemplary embodiments, the fluorinated organic solvent may include fluoroethylene carbonate (FEC), methyl-2,2,2-trifluoroethyl carbonate (FEMC), or a combination thereof.

In exemplary embodiments, the gel polymer electrolyte composition may further include a non-fluorinated linear carbonate compound.

In exemplary embodiments, the gel polymer electrolyte composition may further include ethyl methyl carbonate (EMC).

In exemplary embodiments, the lithium salt may include one or more anionic lithium salts including a nitrogen element.

In exemplary embodiments, the lithium salt may include lithium bistrifluoromethanesulfonylimide (LiTFSI) and lithium difluoro(bisoxalato)phosphate (LiDFBP).

In exemplary embodiments, a molar ratio of lithium bistrifluoromethanesulfonylimide (LiTFSI) to lithium difluoro(bisoxalato)phosphate (LiDFBP) may be 9:1 to 5:5.

In exemplary embodiments, the lithium salt may further include at least one selected from the group consisting of lithium nitrate (LiNO₃), lithium bisfluorosulfonylimide (LiFSI), lithium difluorooxalatoborate (LiDFOB), lithium bisoxalatoborate (LiBOB), lithium hexafluorophosphate (LiPF₆), lithium tetrafluoroborate (LiBF₄), and lithium perchlorate (LiClO₄).

In exemplary embodiments, the content of the compound including one or more ether groups and four or more acrylate groups may be 5% by weight or less, based on the total weight of the gel polymer electrolyte composition for lithium metal batteries.

In exemplary embodiments, the content of the compound including one or more ether groups and four or more acrylate groups may be 1.0% by weight or more, based on the total weight of the gel polymer electrolyte composition for lithium metal batteries.

In exemplary embodiments, the content of the fluorinated organic solvent may be 50% by weight to 95% by weight, based on the total weight of the gel polymer electrolyte composition for lithium metal batteries.

In exemplary embodiments, the content of the lithium salt may be 15% by weight to 30% by weight, based on the total weight of the gel polymer electrolyte composition for lithium metal batteries.

A gel polymer electrolyte for lithium metal batteries according to the present disclosure includes a compound including one or more ether groups and four or more acrylate groups.

A lithium metal battery according to the present disclosure includes: a lithium anode; a cathode disposed opposite the anode; and the above-described gel polymer electrolyte for lithium metal batteries, wherein the gel polymer electrolyte is disposed between the anode and the cathode.

In exemplary embodiments, the cathode may include a cathode active material, wherein the cathode active material may include at least one selected from the group consisting of LiCoO₂, Li(NiₓCo_{y}Mn_{z})O₂(x+y+z=1), Li(NiₓCo_{y}Al_{z})O₂(x+y+z=1), LiFePO₄, and sulfur.

The gel polymer electrolyte composition and the gel polymer electrolyte for lithium metal batteries according to the present disclosure may exhibit high ionic conductivity and favorable lithium ionic conductive properties, and may form a stable film at the anode interface, thereby enhancing the stability of a lithium metal battery.

The gel polymer electrolyte may be widely applied in green technology fields, including electric vehicles, battery charging stations, and green technology fields including renewable energy systems using batteries, such as solar power generation and wind power generation. In addition, the lithium metal battery may be used in eco-friendly electric vehicles and hybrid vehicles to suppress emission of air pollutants and greenhouse gases, thereby contributing to mitigation of climate change.

### [BRIEF DESCRIPTION OF THE DRAWINGS]

The above and other objects, features and advantages of the present disclosure will be more clearly understood from the following detailed description taken in conjunction with the accompanying drawings, in which:
FIGS. 1 and 2 are a schematic plan view and a schematic cross-sectional view, respectively, illustrating a lithium metal battery according to exemplary embodiments;
FIGS. 3a and 3b are graphs illustrating results of evaluating ionic conductivity and a lithium ion transference number (t⁺), including activation energy, for Example 1, a Reference Example, and Comparative Examples 1 and 2.
FIG. 4 is a set of graphs illustrating results of measuring flexibility through compressive strength tests for Example 1, and Comparative Examples 1 and 2;
FIG. 5 is a graph illustrating results of lithium NMR analysis for Example 1, the Reference Example, and Comparative Examples 1 and 2;
FIG. 6 is a set of graphs illustrating results of Raman analysis for Example 1, the Reference Example, and Comparative Examples 1 and 2;
FIG. 7 is a graph illustrating results of FT-IR analysis for a solvent (EMC:FEMC:FEC = 3:5:2 vol%), the Reference Example, Comparative Examples 1 and 2, and Example 1;
FIG. 8 is a set of graphs illustrating results of XPS analysis for lithium metal batteries to which the lithium electrodes of the Reference Example, Comparative Examples 1 and 2, and Example 1 are applied;
FIG. 9 is a graph illustrating results of comparing cycle life characteristics of lithium-NCM batteries to which the lithium electrodes of the Reference Example, Comparative Examples 1 and 2, and Example 1 are applied;
FIG. 10 is a graph illustrating results of comparing leakage currents of lithium-NCM batteries to which the lithium electrodes of the Reference Example and Example 1 are applied;
FIGS. 11a and 11b are TEM images illustrating analysis results of comparing a film thickness formed on a cathode surface after charge and discharge of lithium-NCM batteries to which the lithium electrodes of the Reference Example and Example 1 are applied, respectively;
FIG. 12 illustrates results of analyzing chemical structural changes of dipentaerythritol hexaacrylate (DPHA) in the Reference Example and Example 1;
FIG. 13 is a set of graphs illustrating results of analyzing changes in current density according to a voltage range in the Reference Example and Example 1;
FIG. 14 is a set of graphs illustrating results of XPS analysis for lithium electrode surfaces in the Reference Example and Example 1;
FIG. 15 are TEM images for analysis of cathode film thickness in the Reference Example and Example 1;
FIG. 16 are SEM images for analysis of the Reference Example and Example 1;
FIG. 17 is a graph illustrating charge and discharge performance according to the number of cycles of Example 1;
FIG. 18 is a set of graphs illustrating changes in bulk resistance and interfacial resistance according to cycle operation of the Reference Example, Example 1, Comparative Example 1, and Comparative Example 2;
FIG. 19 is an LSV graph illustrating oxidation stability of the Reference Example, Example 1, Comparative Example 1, and Comparative Example 2; and
FIG. 20 is a set of graphs illustrating symmetric cell evaluation results obtained at different current densities and current amounts for evaluating stability and durability between an electrolyte and lithium of the Reference Example, Example 1, Comparative Example 1, and Comparative Example 2.

### [DETAILED DESCRIPTION OF THE INVENTION]

Unless otherwise defined, all technical and scientific terms used herein have the same meaning as commonly understood by one of ordinary skill in the art to which the present disclosure pertains. Terms used in the description of the present disclosure are merely intended to effectively describe specific embodiments and are not intended to limit the present disclosure.

The singular forms "a," "an" and "the" are intended to include plural forms as well, unless the context clearly indicates otherwise.

Hereinafter, unless otherwise defined in the present specification, when a portion such as a layer, film, thin film, region, or plate is described as being "on" or "above" another portion, it may refer not only to a case where the portion is directly on the other portion, but also to a case where another portion is interposed therebetween.

The term "A and/or B" as used in the present specification may refer to an embodiment including both A and B, or an embodiment including either A or B.

As used herein, the term "A-based compound" may refer to a compound including a functional group A or a derivative thereof.

As used herein, the term "polymer electrolyte" may refer not only to an all-solid-state electrolyte, but also to a gel polymer electrolyte in which an electrolyte solution is included in a polymer-based matrix. For example, the gel polymer electrolyte may be in the form of a physical gel prepared by swelling a polymer matrix with an electrolyte solution, or in the form of a chemical gel prepared by curing a composition in which the electrolyte solution and a monomer are mixed. Hereinafter, embodiments of the present disclosure will be described in more detail with reference to the accompanying drawings.

A gel polymer electrolyte composition for lithium metal batteries according to exemplary embodiments (hereinafter, also abbreviated as a "gel polymer electrolyte composition") may include a compound including one or more ether groups and four or more acrylate groups, a fluorinated organic solvent, and a lithium salt.

The compound including one or more ether groups and four or more acrylate groups may be applied as a crosslinking agent for the gel polymer electrolyte composition.

The compound including one or more ether groups and four or more acrylate groups may have a flexible chain structure by virtue of including ether groups and acrylate groups, thereby exhibiting high ionic conductivity comparable to that of a liquid electrolyte.

In addition, the acrylate groups included in a structure of the compound including one or more ether groups and four or more acrylate groups may induce an aggregation reaction among lithium cations, nitrogen-containing anions, and additives as components of a liquid electrolyte, thereby forming a stable inorganic-based anode surface film when applied to a lithium metal battery.

Further, the compound including one or more ether groups and four or more acrylate groups may include functional groups having relatively weak interactions with lithium ions, thereby facilitating migration of lithium ions and exhibiting high lithium ionic conductive properties.

Accordingly, the gel polymer electrolyte according to embodiments of the present disclosure may provide improved cycle life characteristics and enhanced electrochemical stability.

In some embodiments, the compound including one or more ether groups and four or more acrylate groups may include from one to three ether groups, specifically one or two ether groups. In addition, the compound including one or more ether groups and four or more acrylate groups may include from four to eight acrylate groups, specifically from four to seven acrylate groups, specifically from four to six acrylate groups, or specifically five or six acrylate groups.

In some embodiments, the compound including one or more ether groups and four or more acrylate groups may have a molecular weight of 200 to 1,000 g/mol, specifically 300 to 700 g/mol, specifically 350 to 600 g/mol, or specifically 352.5 to 578.56 g/mol.

In some embodiments, the compound including one or more ether groups and four or more acrylate groups may include at least one of dipentaerythritol hexaacrylate (DPHA) and dipentaerythritol penta-acrylate (DPPA).

In some embodiments, the compound including one or more ether groups and four or more acrylate groups may be dipentaerythritol hexaacrylate (DPHA).

When the compound including one or more ether groups and four or more acrylate groups is dipentaerythritol hexaacrylate (DPHA), a carbonyl group (C=O) included in an acrylate group of the dipentaerythritol hexaacrylate (DPHA) may further enhance a lithium ion transference number through interaction with lithium ions. In addition, by inducing aggregation of components of a liquid electrolyte, a solvation structure is altered, so that a stable inorganic-rich interphase may be formed on an anode surface, and oxidative stability may be improved on a cathode, thereby further improving cycle life characteristics of a lithium metal battery.

In some embodiments, the fluorinated organic solvent may include a fluorinated carbonate compound, a fluorinated aromatic compound, or a fluorinated ether compound. The fluorinated organic solvent may include at least one selected from the group consisting of fluoroethylene carbonate (FEC), methyl-2,2,2-trifluoroethyl carbonate (FEMC), trifluorotoluene (TFT), 1,1,2,2-tetrafluoroethyl 2,2,3,3-tetrafluoropropyl ether (TTE), and difluorobenzene (DFB).

In some embodiments, the fluorinated organic solvent may be a fluorinated cyclic carbonate compound or a fluorinated linear carbonate compound, and more specifically, may include a fluorinated cyclic carbonate compound. Accordingly, dissolution of a lithium salt may be facilitated.

In some embodiments, the fluorinated organic solvent may include fluoroethylene carbonate (FEC), methyl-2,2,2-trifluoroethyl carbonate (FEMC), or a combination thereof.

By including the above-described fluorinated organic solvent in the gel polymer electrolyte, a stable inorganic film including lithium fluoride (LiF) as a main component may be formed at a lithium metal anode interface, and high oxidative stability may be secured at a cathode interface, thereby simultaneously improving cycle life characteristics, safety, and ionic conductivity of a battery.

The gel polymer electrolyte composition may further include a non-fluorinated organic solvent. The non-fluorinated organic solvent may include a non-fluorinated carbonate compound, and the non-fluorinated carbonate compound may include a non-fluorinated linear carbonate compound or a non-fluorinated cyclic carbonate compound.

When the fluorinated organic solvent is a fluorinated cyclic carbonate compound, the non-fluorinated organic solvent may be a non-fluorinated linear carbonate compound. Accordingly, both lithium solubility and ionic conductivity may be sufficiently secured.

For example, the non-fluorinated linear carbonate compound may include dimethyl carbonate (DMC), ethyl methyl carbonate (EMC), diethyl carbonate (DEC), methyl propyl carbonate, ethyl propyl carbonate, dipropyl carbonate, methyl acetate, ethyl acetate, or propyl acetate. In some embodiments, the gel polymer electrolyte composition may include the above-described fluorinated organic solvent and non-fluorinated organic solvent, and specifically may include a fluorinated cyclic carbonate compound and a non-fluorinated linear carbonate compound, and more specifically may include FEC and/or FEMC, and EMC.

In some embodiments, the gel polymer electrolyte composition may include ethyl methyl carbonate (EMC).

In some embodiments, the lithium salt may include one or more nitrogen-containing anionic lithium salts.

In some embodiments, the lithium salt may include lithium bistrifluoromethanesulfonylimide (LiTFSI) and lithium difluoro(bisoxalato)phosphate (LiDFBP).

By including one or more nitrogen-containing anionic lithium salts, the lithium salt may participate in a solvation structure of lithium ions and may undergo reductive decomposition during a charging process, thereby forming lithium nitride having high ionic conductivity (e.g., Li₃N) on a lithium electrode surface. Accordingly, ionic conductivity of a lithium metal battery may be improved.

Specifically, the lithium bistrifluoromethanesulfonylimide (LiTFSI) may have an N-S bond structure, thereby improving ion conductivity. Lithium difluoro(bisoxalato)phosphate (LiDFBP) may form a stable solid electrolyte interphase (SEI) due to an oxalato-based phosphate structure thereof.

In some embodiments, a molar ratio of lithium bistrifluoromethanesulfonylimide (LiTFSI) to lithium difluoro(bisoxalato)phosphate (LiDFBP) may be 9:1 to 5:5.

When the molar ratio of lithium bistrifluoromethanesulfonylimide (LiTFSI) to lithium difluoro(bisoxalato)phosphate (LiDFBP) satisfies the above-described range, mobility of lithium ions in an electrolyte may be increased and lithium dendrite growth may be suppressed, thereby simultaneously improving cycle life characteristics and electrochemical stability of a lithium metal battery.

In some embodiments, the lithium salt may further include at least one selected from the group consisting of lithium nitrate (LiNO₃), lithium bisfluorosulfonylimide (LiFSI), lithium difluorooxalatoborate (LiDFOB), lithium bisoxalatoborate (LiBOB), lithium hexafluorophosphate (LiPF₆), lithium tetrafluoroborate (LiBF₄), and lithium perchlorate (LiClO₄).

In some embodiments, the content of the compound including one or more ether groups and four or more acrylate groups may be 5% by weight ("wt%") or less, based on the total weight of the gel polymer electrolyte composition for lithium metal batteries.

In some embodiments, the content of the compound including one or more ether groups and four or more acrylate groups may be 1.0 wt% or more, based on the total weight of the gel polymer electrolyte composition for lithium metal batteries.

In some embodiments, the content of the compound including one or more ether groups and four or more acrylate groups may be 1.0 wt% to 3 wt%, based on the total weight of the gel polymer electrolyte composition for lithium metal batteries.

When the content of the compound including one or more ether groups and four or more acrylate groups satisfies the above-described range, a crosslinking reaction within the gel polymer electrolyte composition may proceed uniformly, thereby achieving a balance between mechanical stability and ionic conductivity.

In some embodiments, the content of the fluorinated organic solvent may be 50 wt% to 95 wt%, based on the total weight of the gel polymer electrolyte composition for lithium metal batteries.

When the content of the fluorinated organic solvent satisfies the above-described range, a curing degree of the gel polymer electrolyte and mobility of lithium ions may be improved, thereby enhancing safety and ionic conductivity of the lithium metal battery.

In some embodiments, the content of the lithium salt may be 15 wt% to 30 wt%, based on the total weight of the gel polymer electrolyte composition for the lithium metal battery.

When the content of the lithium salt satisfies the above-described range, lithium ion transport properties and interfacial stability may be improved, thereby enhancing ionic conductive properties, charge and discharge efficiency, and cycle life of the lithium metal battery.

A gel polymer electrolyte for lithium metal batteries according to the present disclosure (hereinafter, also abbreviated as a "gel polymer electrolyte") may include a compound including one or more ether groups and four or more acrylate groups. The compound including one or more ether groups and four or more acrylate groups included in the gel polymer electrolyte may be defined in accordance with the above-described description.

In some embodiments, ionic conductivity of the gel polymer electrolyte may be 2.6 X 10⁻³ S/cm or more. For example, the ionic conductivity of the gel polymer electrolyte may be 10 X 10⁻³ S/cm or less.

Generally, gel polymer electrolytes may exhibit lower ionic conductivity than liquid electrolytes. However, the compound including one or more ether groups and four or more acrylate groups included in the above-described gel polymer electrolyte may have a flexible chain structure by including ether groups and acrylate groups, thereby increasing ionic conductivity of the lithium metal battery.

In some embodiments, the gel polymer electrolyte may be a non-aqueous electrolyte that does not include water.

In some embodiments, the compound including one or more ether groups and four or more acrylate groups included in the gel polymer electrolyte composition for lithium metal batteries may be applied as a thermal crosslinking agent.

In some embodiments, the gel polymer electrolyte composition may be prepared as a thermally curable gel polymer electrolyte.

For example, the gel polymer electrolyte composition may be injected into a battery case in which an electrode assembly is accommodated, and then maintained at about 70°C for 3 hours to induce an in-situ thermal curing reaction, thereby forming a gel polymer electrolyte.

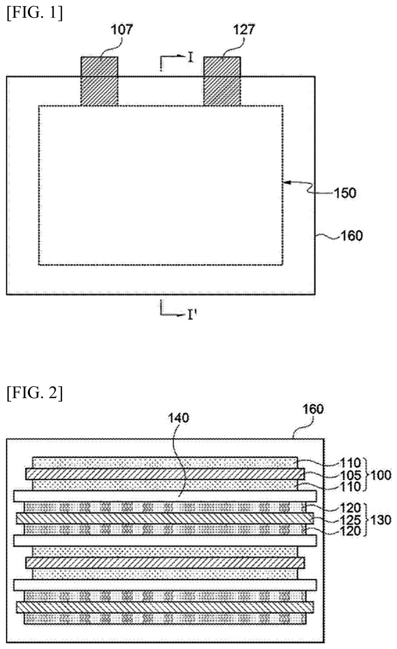

FIGS. 1 and 2 are a schematic plan view and a schematic cross-sectional view, respectively, illustrating a lithium metal battery according to exemplary embodiments. FIG. 2 is a cross-sectional view taken along line I-I' in FIG. 1.

The lithium metal battery structures illustrated in FIGS. 1 and 2 are schematic, and the lithium metal battery structures according to the present disclosure are not limited thereto.

Referring to FIGS. 1 and 2, the lithium metal battery may include an electrode assembly 150 including a cathode 100 and an anode 130. The electrode assembly 150 may be accommodated in a case 160 together with the gel polymer electrolyte according to the exemplary embodiments described above. For example, the electrode assembly 150 may further include the gel polymer electrolyte 140 interposed between the cathode 100 and the anode 130. Optionally, a separator may further be included between the cathode 100 and the anode 130.

In some embodiments, the lithium metal battery may include the anode 130, the cathode
100 disposed opposite the anode 130, and the gel polymer electrolyte 140 for lithium metal batteries which is disposed between the anode 130 and the cathode 100.

The cathode 100 may include a cathode current collector 105 and a cathode active material layer 110 disposed on at least one surface of the cathode current collector 105.

For example, the cathode current collector 105 may include stainless steel, nickel, aluminum, titanium, or an alloy thereof. The cathode current collector may also include aluminum or stainless steel having a surface treated with carbon, nickel, titanium or silver. For example, the cathode current collector may have a thickness of 10 µm to 50 µm, but is not limited thereto.

For example, the cathode active material may include a compound capable of reversibly intercalating and deintercalating lithium ions.

In some embodiments, the cathode includes a cathode active material, and the cathode active material may include at least one selected from the group consisting of LiCoO₂, Li(NiₓCo_{y}Mn_{z})O₂(x+y+z=1), Li(NiₓCo_{y}Al_{z})O₂(x+y+z=1), LiFePO₄, and sulfur.

In exemplary embodiments, the cathode active material may include a lithium-transition metal oxide. For example, the lithium-transition metal oxide may include nickel (Ni), and may further include at least one selected from the group consisting of cobalt (Co) and manganese (Mn).

For example, the lithium-transition metal oxide may have a structure represented by Formula A below.

[Formula A] Li₁₊ₐNi_{1-(x+y)}CoₓM_{y}O₂

In the Formula A, a, x and y may satisfy -0.05≤a≤0.15, 0.01≤x≤0.3, and 0.01≤y≤0.3, and M may be one or more elements selected from Mn, Mg, Sr, Ba, B, Al, Si, Ti, Zr or W.

In some embodiments, the cathode active material may include lithium metal phosphate particles having a structure represented by Formula B below.

[Formula B] Li_{w}MₓP_{y}O_{4+z}

In Formula B, w, x, y and z may satisfy 0.9≤w≤1.2, 0.99≤x≤1.01, 0.9≤y≤1.2, and - 0.1≤z≤0.1, and M may be at least one element selected from the group consisting of Fe, Ni, Mn, Ti and V.

For example, in Formula B, M may be Fe, and the cathode active material may include a lithium iron phosphate (LFP)-based active material (e.g., LiFePO₄).

In some embodiments, the cathode active material may include, for example, a manganese (Mn)-rich active material, a lithium (Li)-rich layered oxide (LLO)/over-lithiated oxide (OLO)-based active material, or a cobalt (Co)-less active material, which has a chemical structure or a crystal structure represented by Formula C below.

For example, a cathode active material core may include a chemical structure or a crystal structure represented by Formula C below.

[Formula C] p[Li₂MnO₃]·(1-p)[Li_{q}JO₂]

In Formula C, p and q may satisfy 0<p<1, and 0.9≤q≤1.2, and J may include at least one element selected from Mn, Ni, Fe, Cr, V, Cu, Zn, Ti, Al, Mg and B.

For example, the cathode active material may be dispersed in a solvent to prepare a cathode slurry. The cathode slurry may be coated on the cathode current collector 105, and then dried and roll-pressed to prepare the cathode 100. The coating process may be performed using methods such as gravure coating, slot die coating, simultaneous multilayer die coating, imprinting, doctor blade coating, dip coating, bar coating or casting, etc., but it is not limited thereto. The cathode slurry may further include a binder, and optionally may further include a conductive material, a thickener and the like.

Non-limiting examples of solvents used in the preparation of the cathode slurry may include N-methyl-2-pyrrolidone (NMP), dimethylformamide, dimethylacetamide, N,N-dimethylaminopropylamine, ethylene oxide, tetrahydrofuran and the like.

The binder may include polyvinylidene fluoride (PVDF), poly(vinylidene fluoride-co-hexafluoropropylene), polyacrylonitrile, polymethylmethacrylate, acrylonitrile butadiene rubber (NBR), poly(butadiene) rubber (BR), styrene-butadiene rubber (SBR) and the like. In one embodiment, a PVDF-based binder may be used as the cathode binder.

The conductive material may be added to the cathode active material layer in consideration of enhancing the conductivity thereof and/or the mobility of lithium ions or electrons. For example, the conductive material may include carbon-based conductive materials such as graphite, carbon black, acetylene black, Ketjen black, graphene, carbon nanotubes, vapor-grown carbon fibers (VGCF), and carbon fibers; and/or metal-based conductive materials such as tin, tin oxide, and titanium oxide; as well as perovskite materials such as LaSrCoO₃, and LaSrMnO₃.

As the thickener, for example, carboxymethyl cellulose (CMC) may be used.

In some embodiments, the anode 130 may be an electrode for a lithium metal battery. For example, the anode may be lithium metal.

According to exemplary embodiments, the anode 130 may further include an electrode current collector 125. A lithium metal storage layer 120 may be disposed on at least one surface of the electrode current collector 125.

The electrode current collector 125 may include gold, stainless steel, nickel, aluminum, iron, titanium, copper, or an alloy thereof, and for example, may include copper or a copper alloy.

In one embodiment, a gel polymer electrolyte 140 may be interposed between the cathode 100 and the anode 130.

Optionally, a separator may be interposed between the cathode 100 and the anode 130. The separator may prevent an electrical short circuit between the cathode and the anode, and maintain flow of ions. In one embodiment, the separator may have a thickness of 10 µm to 20 µm.

The separator may include a porous polymer film or a porous non-woven fabric. The porous polymer film may include a polyolefin polymer such as an ethylene polymer, a propylene polymer, an ethylene/butene copolymer, an ethylene/hexene copolymer, or an ethylene/methacrylate copolymer. The porous non-woven fabric may include glass fibers having a high melting point, polyethylene terephthalate fibers and the like. For example, the separator may include polyethylene.

The separator may also include a ceramic material. For example, inorganic particles may be coated on the polymer film or dispersed in the polymer film to improve heat resistance.

The separator may have a single-layer or multilayer structure including the above-described polymer film and/or non-woven fabric.

In one embodiment, the lithium metal battery may not include the separator. The gel polymer electrolyte substantially functions as a separator and may prevent a short circuit between the cathode 100 and the anode 130. In addition, lithium ions may migrate between the cathode 100 and the anode 130 through the gel polymer electrolyte.

In some embodiments, an area and/or a volume of the anode 130 may be larger than those of the cathode 100. Accordingly, lithium ions generated from the cathode 100 may smoothly migrate to the anode 130 without being precipitated during the process, for example.

According to exemplary embodiments, an electrode cell may be defined by the cathode 100, the anode 130, and the gel polymer electrolyte 140, and a plurality of electrode cells may be stacked to form the electrode assembly 150, for example, in a jelly roll form.

Optionally, an electrode cell may be defined by the cathode 100, the anode 130, the gel polymer electrolyte 140, and a separator.

In some embodiments, the electrode assembly 150 may have a jelly roll form formed by winding, stacking, z-folding, or stack-folding the cathode 100, the anode 130, and the gel polymer electrolyte 140.

In one embodiment, the electrode assembly may be formed by repeatedly stacking the cathode 100, the anode 130, and the gel polymer electrolyte 140, each being individually cut or separated into layers.

For example, electrode tabs (cathode tabs and anode tabs) may protrude from the cathode current collector 105 and the anode current collector 125, respectively, and may extend to one side of the case 160. The electrode tabs may be welded together with the one side of the case 160 and connected to electrode leads (a cathode lead 107 and an anode lead 127) that extend or are exposed to the outside of the case 160.

For example, a pouch-type case, a prismatic case, a cylindrical case, or a coin-type case may be used.

The electrode assembly 150 may be accommodated in the case 160 together with the electrolyte to define the lithium secondary battery.

For example, the gel polymer electrolyte according to the exemplary embodiments
described above may be used not only in lithium secondary batteries but also in manufacture of sodium secondary batteries, potassium secondary batteries, and calcium secondary batteries, etc. The invention is also defined by the following aspects:
Aspect 1. A gel polymer electrolyte composition for lithium metal batteries comprising: a compound including one or more ether groups and four or more acrylate groups; a fluorinated organic solvent; and a lithium salt.
Aspect 2. The gel polymer electrolyte composition for lithium metal batteries according to aspect 1, wherein the compound including one or more ether groups and four or more acrylate groups includes at least one of dipentaerythritol hexaacrylate (DPHA) and dipentaerythritol pentaacrylate (DPPA).
Aspect 3. The gel polymer electrolyte composition for lithium metal batteries according to aspect 1 or 2, wherein the fluorinated organic solvent includes at least one selected from the group consisting of fluoroethylene carbonate (FEC), methyl-2,2,2-trifluoroethyl carbonate (FEMC), trifluorotoluene (TFT), 1,1,2,2-tetrafluoroethyl 2,2,3,3-tetrafluoropropyl ether (TTE), and difluorobenzene (DFB).
Aspect 4. The gel polymer electrolyte composition for lithium metal batteries according to any one of aspect 1 to 3, further comprising a non-fluorinated linear carbonate compound.
Aspect 5. The gel polymer electrolyte composition for lithium metal batteries according to any one of aspect 1 to 4, further comprising ethyl methyl carbonate (EMC).
Aspect 6. The gel polymer electrolyte composition for lithium metal batteries according to any one of aspect 1 to 5, wherein the lithium salt includes one or more anionic lithium salts including a nitrogen element.
Aspect 7. The gel polymer electrolyte composition for lithium metal batteries according to any one of aspect 1 to 6, wherein the lithium salt includes lithium bistrifluoromethanesulfonylimide (LiTFSI) and lithium difluoro(bisoxalato)phosphate (LiDFBP).
Aspect 8. The gel polymer electrolyte composition for lithium metal batteries according to aspect 7, wherein a molar ratio of lithium bistrifluoromethanesulfonylimide (LiTFSI) to lithium difluoro(bisoxalato)phosphate (LiDFBP) is 9:1 to 5:5.
Aspect 9. The gel polymer electrolyte composition for lithium metal batteries according to any one of aspect 1 to 8, wherein the lithium salt further comprises at least one selected from the group consisting of lithium nitrate (LiNO₃), lithium bisfluorosulfonylimide (LiFSI), lithium difluorooxalatoborate (LiDFOB), lithium bisoxalatoborate (LiBOB), lithium hexafluorophosphate (LiPF₆), lithium tetrafluoroborate (LiBF₄), and lithium perchlorate (LiClO₄).
Aspect 10. The gel polymer electrolyte composition for lithium metal batteries according to any one of aspect 1 to 9, wherein the content of the compound including one or more ether groups and four or more acrylate groups is 5% by weight or less, based on the total weight of the gel polymer electrolyte composition for lithium metal batteries.
Aspect 11. The gel polymer electrolyte composition for lithium metal batteries according to any one of aspect 1 to 10, wherein the content of the compound including one or more ether groups and four or more acrylate groups is 1.0% by weight or more, based on the total weight of the gel polymer electrolyte composition for lithium metal batteries.
Aspect 12. The gel polymer electrolyte composition for lithium metal batteries according to any one of aspect 1 to 11, wherein the content of the fluorinated organic solvent is 50% by weight to 95% by weight, based on the total weight of the gel polymer electrolyte composition for lithium metal batteries.
Aspect 13. The gel polymer electrolyte composition for lithium metal batteries according to any one of aspect 1 to 12, wherein the content of the lithium salt is 15% by weight to 30% by weight, based on the total weight of the gel polymer electrolyte composition for lithium metal batteries.
Aspect 14. A gel polymer electrolyte for lithium metal batteries comprising a compound including one or more ether groups and four or more acrylate groups.
Aspect 15. A lithium metal battery comprising: a lithium anode; a cathode disposed opposite the anode; and the gel polymer electrolyte for lithium metal batteries according to aspect 14, wherein the gel polymer electrolyte is disposed between the anode and the cathode.

### Examples and Comparative Examples

### (1) Example 1

A slurry was prepared by mixing Li[Ni_{0.8}Co_{0.1}Mn_{0.1}]O₂ as a cathode active material, carbon black as a conductive material, and polyvinylidene fluoride (PVdF) as a binder in a weight ratio of 96:2:2. The slurry was uniformly applied to an aluminum foil having a thickness of 12 µm and vacuum-dried at 110 °C. The dried slurry was then roll-pressed to fabricate a cathode having a density of 3.2 g/cm³.

An organic solvent was prepared by mixing fluoroethylene carbonate (FEC), methyl-2,2,2-trifluoroethyl carbonate (FEMC), and ethyl methyl carbonate (EMC) in a volume ratio of 2:5:3.

A liquid electrolyte was prepared by mixing lithium bistrifluoromethanesulfonylimide (LiTFSI) and lithium hexafluorophosphate (LiPF₆) in a molar ratio of 4:6 in the organic solvent such that a concentration of the lithium salt was 1 M.

Dipentaerythritol hexaacrylate (DPHA) was added to the liquid electrolyte in an amount of 3 wt% based on the total weight of the gel polymer electrolyte composition, and the mixture was stirred to prepare a gel polymer electrolyte composition.

The gel polymer electrolyte composition was injected into a battery cell including the cathode, a polyethylene (PE) separator (thickness: 13 µm), and a lithium metal anode.

Thereafter, the injected gel polymer electrolyte composition was heat-treated at 70 °C for 3 hours to induce an in-situ thermal crosslinking reaction, thereby forming a gel polymer electrolyte and manufacturing a lithium metal battery including the gel polymer electrolyte within the cell.

### (2) Example 2

A gel polymer electrolyte and a lithium metal battery of Example 2 were manufactured in the same manner as in Example 1, except that dipentaerythritol hexaacrylate (DPHA) was applied in an amount of 1.5 wt% based on the total weight of the gel polymer electrolyte composition.

### (3) Example 3

A gel polymer electrolyte and a lithium metal battery of Example 3 were manufactured in the same manner as in Example 1, except that dipentaerythritol hexaacrylate (DPHA) was applied in an amount of 5 wt% based on the total weight of the gel polymer electrolyte composition.

### (4) Example 4

A gel polymer electrolyte and a lithium metal battery of Example 4 were manufactured in the same manner as in Example 1, except that dipentaerythritol hexaacrylate (DPHA) was applied in an amount of 7.5 wt% based on the total weight of the gel polymer electrolyte composition.

### (5) Reference Example

An organic solvent was prepared by mixing fluoroethylene carbonate (FEC), methyl-2,2,2-trifluoroethyl carbonate (FEMC), and ethyl methyl carbonate (EMC) in a volume ratio of 2:5:3.

A liquid electrolyte was prepared by mixing lithium bistrifluoromethanesulfonylimide (LiTFSI) and lithium hexafluorophosphate (LiPF₆) in a molar ratio of 4:6 in the organic solvent such that a concentration of the lithium salt was 1 M.

The liquid electrolyte was injected into a battery cell including the cathode of Example 1, a polyethylene (PE) separator (thickness: 13 µm), and a lithium metal anode, to manufacture a lithium metal battery.

### (6) Comparative Example 1

A gel polymer electrolyte and a lithium metal battery of Comparative Example 1 were manufactured in the same manner as in Example 1, except that trimethylolpropane trimethaacrylate (TMPTMA) was applied in an amount of 4 wt% instead of dipentaerythritol hexaacrylate (DPHA) in Example 1.

### (7) Comparative Example 2

A gel polymer electrolyte and a lithium metal battery of Comparative Example 2 were manufactured in the same manner as in Example 1, except that ethoxylated trimethylpropane triacrylate (ETPTA) was applied in an amount of 5 wt% instead of dipentaerythritol hexaacrylate (DPHA) in Example 1.

### (8) Comparative Example 3

A gel polymer electrolyte and a lithium metal battery of Comparative Example 3 were manufactured in the same manner as in Example 1, except that ethoxylated trimethylpropane triacrylate (ETPTA) was applied in an amount of 3 wt% instead of dipentaerythritol hexaacrylate (DPHA) in Example 1.

### Experimental Example

### (1) Evaluation of Ionic Conductivity

Ionic conductivity was measured by electrochemical impedance spectroscopy (EIS).

80 µL of the gel polymer electrolytes according to the Examples, Comparative Examples, and the Reference Example were loaded onto a polyethylene (PE) separator, and stainless steel (SUS, Type 304) substrates were contacted on both sides. An AC voltage was applied, and impedance was measured in a symmetric cell (frequency range: 1 Hz to 1 MHz; amplitude: 10 mV).

The bulk resistance (R, Ω) of the electrolyte was determined from an intersection point of a semicircle or a straight line in a high-frequency region of an impedance spectrum (Nyquist plot) with a real axis. The thickness (t, cm) and electrode cross-sectional area (A, cm²) of the gel polymer electrolyte specimen were measured, and the ionic conductivity (σ, S/cm) was calculated according to Equation 2 below. [Formula 2] $σ = t / \left(R\times A\right)$

In Equation 2, σ is ionic conductivity (S/cm), t is a thickness (cm), A is a cross-sectional area (cm²), and R is an electrolyte resistance (Ω).

Measurements were conducted under various temperature conditions, and the temperature-dependent ionic conductive properties of the electrolyte were derived.

In addition, the lithium ion transference number (t⁺) was evaluated using a symmetric cell composed of Li/electrolyte/Li, fabricated by loading 80 µL of the gel polymer electrolytes according to the Examples, Comparative Examples, and the Reference Example onto a polyethylene (PE) separator and contacting lithium metal electrodes on both sides. An initial interfacial resistance was measured by AC impedance analysis, and then a polarization experiment was performed by applying a constant DC voltage. An initial current immediately after polarization and a steady-state current after a lapse of polarization time were measured, and a steady-state interfacial resistance was then obtained by AC impedance measurement. These measured values were applied to calculation of the lithium ion transference number (t⁺) using a Bruce-Vincent equation shown in Equation 3 below. [Equation 3] ${t}^{+} = \frac{\left({I}_{ss}∗\left(ΔV-{I}_{0}∗{R}_{0}\right)\right)}{\left({I}_{0}∗\left(ΔV-{I}_{ss}∗{R}_{ss}\right)\right)}$

In Equation 3, △V denotes a DC polarization voltage applied to a battery, Iₒ denotes an initial current immediately after application of the DC voltage, and Iₛₛ denotes a steady-state current after a sufficient polarization time has elapsed. In addition, Ro denotes an initial interfacial resistance derived from AC impedance analysis before polarization, and Rₛₛ denotes a steady-state interfacial resistance obtained after polarization.

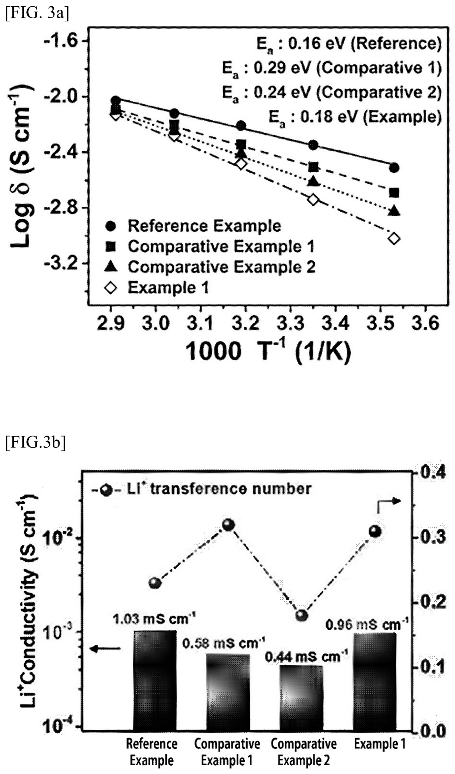

FIGS. 3a and 3b are graphs illustrating results of evaluating ionic conductivity and the lithium ion transference number (t⁺), including activation energy, for Example 1, the Reference Example, and Comparative Examples 1 and 2.

**[TABLE 1]**

| | Ionic conductivity (S/cm) | Lithium ion transference number (t⁺) | Effective lithium ion conductivity (S/cm) | Activation energy (eV) |
|---|---|---|---|---|
| Example 1 | 2.6 × 10⁻³ | 0.31 | 0.96 × 10⁻³ | 0.18 |
| Example 2 | 3.4 × 10⁻³ | 0.28 | 0.93 × 10⁻³ | |
| Example 3 | 7.4 × 10⁻⁴ | 0.32 | 0.72 × 10⁻³ | |
| Example 4 | 2.4 × 10⁻⁴ | 0.31 | 0.58 × 10⁻³ | |
| Reference example | 5.1 × 10⁻³ | 0.23 | 1.03 × 10⁻³ | 0.16 |
| Comparative Example 1 | 2.3 × 10⁻³ | 0.32 | 0.58× 10⁻³ | 0.29 |
| Comparative Example 2 | 1.8 × 10⁻³ | 0.18 | 0.44× 10⁻³ | 0.24 |
| Comparative Example 3 | 6.5 × 10⁻⁴ | 0.29 | 0.66 × 10⁻³ | |

Referring to Table 1 and FIGS. 3a and 3b, the gel polymer electrolytes of Examples 1 and 2 exhibit lower ionic conductivity than the liquid electrolyte of the Reference Example, but exhibit a significantly increased lithium ion transference number. In addition, the gel polymer electrolytes of Examples 1 and 2 exhibit higher ionic conductivity and lithium ion transport properties than those of Comparative Examples 1 and 2. This indicates that the gel polymer electrolytes according to the Examples may improve selective mobility of lithium ions and alleviate ion concentration deviation at an anode interface, thereby improving cycle life characteristics and stability of a battery. In addition, activation energy was calculated using an Arrhenius plot obtained by logarithmically plotting ionic conductivity values as a function of temperature indicated in FIG. 3a and Table 1, and when comparing Comparative Examples 1 and 2 with Example 1, Example 1 was found to exhibit the lowest activation energy of 0.18 eV. This value is comparable to an activation energy of 0.16 eV of the liquid electrolyte of the Reference Example, indicating that ionic mobility may be maintained at a level similar to that of the liquid electrolyte despite polymerization, and thus the electrolyte of Example 1 may have properties advantageous for ion conduction within the electrolyte. In addition, with respect to lithium ion transference number, electrolytes composed of an acrylate-based crosslinking agent, such as Example 1, exhibit higher values than the liquid electrolyte of the Reference Example, whereas in Comparative Example 2, in which a relatively large amount of ether groups is included, the lithium ion transference number was measured to be higher than that of the Reference Example. These results indicate that conductivity and lithium ion transference number of an electrolyte may be influenced not only by a type of functional group but also by a content thereof.

### (2) Evaluation of Compressive Strength

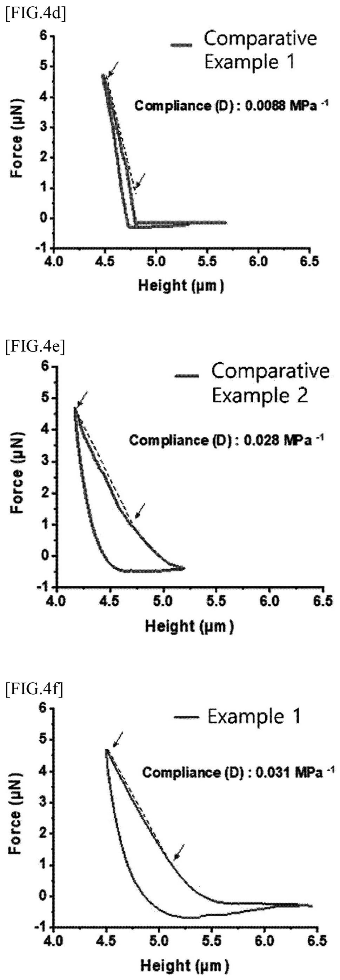

FIG. 4(d) illustrates results of a compression strength test performed on the gel polymer electrolyte of Comparative Example 1, FIG. 4(e) illustrates results for Comparative Example 2, and FIG. 4(f) illustrates results for Example 1, in which flexibility was measured through the compression strength test.

Flexibility measurements were performed at room temperature (25 °C), and stress was measured as a function of strain by applying a constant load. The gel polymer electrolytes prepared from respective precursors were heat-cured, and a modulus was measured, after which a reciprocal of the measured modulus was calculated to compare compliance values. In this case, an NX-10 (in a glove box, Park Systems, Korea) was used as analytical equipment, and scan sizes were 10 µm × 10 µm, and 2 µm × 2 µm.

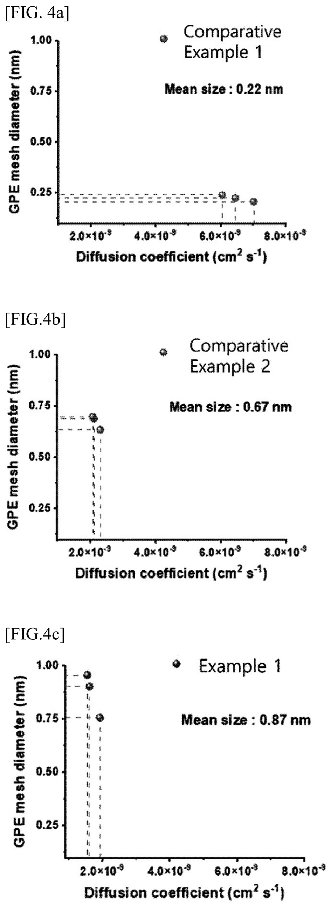

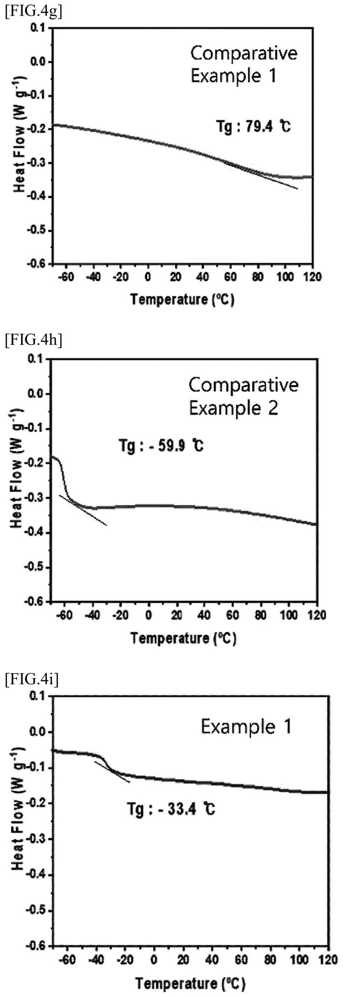

Referring to FIG. 4, Comparative Example 2 and Example 1, which include ether groups, exhibit higher flexibility than Comparative Example 1.

This indicates that freedom of polymer chains at room temperature may be relatively high, resulting in improved resilience to deformation, and an increase in flexibility of polymer components may have a direct correlation with enhanced ion mobility in the gel polymer electrolyte.

### (3) Lithium NMR Analysis

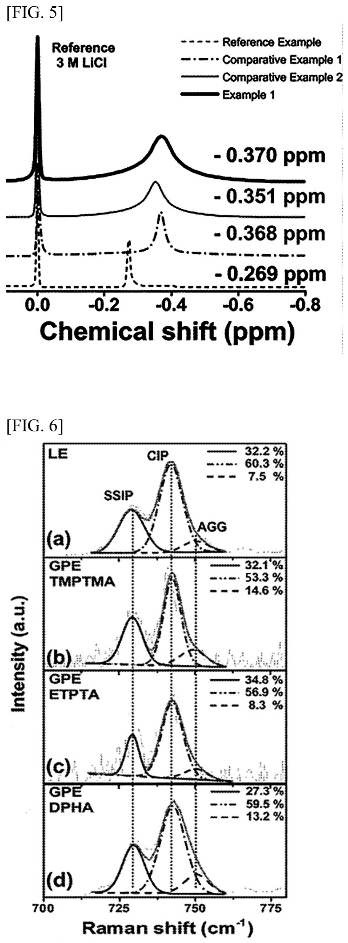

FIG. 5 illustrates lithium NMR analysis results for Example 1, the Reference Example, and Comparative Examples 1 and 2. Referring to FIG. 5, when comparing the Reference Example with Example 1, lithium NMR peaks of Comparative Examples 1 and 2 and Example 1, which include acrylate groups, are shifted in an upfield direction relative to the Reference Example.

This may be interpreted as resulting from occurrence of ion-solvent aggregation between lithium ions and solvent molecules within an electrolyte when a gel polymer electrolyte including acrylate groups is used. Accordingly, gel polymer electrolytes including a relatively high content of acrylate groups, such as those of Comparative Example 1 and Example 1, may exhibit more favorable interactions and aggregation behavior between lithium salts and solvent components within the electrolyte.

### (4) Raman Analysis of Electrolyte

FIG. 6 (a) illustrates Raman analysis results for the electrolytes of the Reference Example, (b) Comparative Example 1, (c) Comparative Example 2, and (d) Example 1, respectively.

As a result of the analysis, compared to the Reference Example, application of gel polymer electrolytes of Comparative Example 1 and Example 1 may result in formation of an aggregate-type solvation structure in which lithium ions and anions are aggregated.

This may indicate that, as a proportion of acrylate functional groups within polymer chains of the gel polymer electrolyte increases, interactions between lithium ions and anions are strengthened, such that lithium ions may exist in a more concentrated state within the electrolyte.

On the other hand, when an ether group content is excessive, aggregation among electrolyte components may be suppressed, such that lithium ions tend to be distributed in a relatively free manner.

Accordingly, the gel polymer electrolyte according to Example 1, which includes four or more acrylate groups, may be advantageous for formation of an ion-solvent aggregation structure among lithium ions, solvent molecules, and anions.

### (5) FT-IR Analysis of Electrolyte

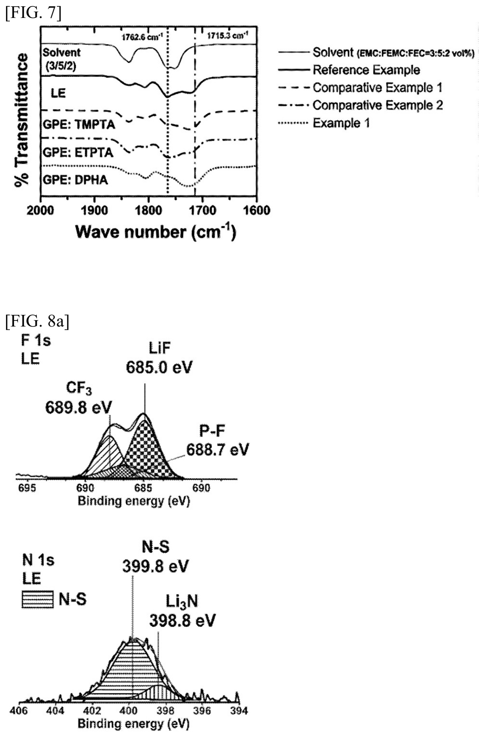

FIG. 7 illustrates FT-IR analysis results for a solvent (EMC:FEMC:FEC = 3:5:2 vol%), the Reference Example, Comparative Examples 1 and 2, and Example 1. The FT-IR results were compared among the electrolytes of the Reference Example, Comparative Examples 1 and 2, and Example 1 using a non-lithium-bound solvent (EMC:FEMC:FEC = 3:5:2 vol%) as a reference. As a result of the analysis, Comparative Example 1 and Example 1, which include a relatively high proportion of acrylate groups, may exhibit a higher binding tendency with fluoroethylene carbonate (FEC) in a lithium solvation structure compared to the Reference Example.

### (6) XPS Analysis

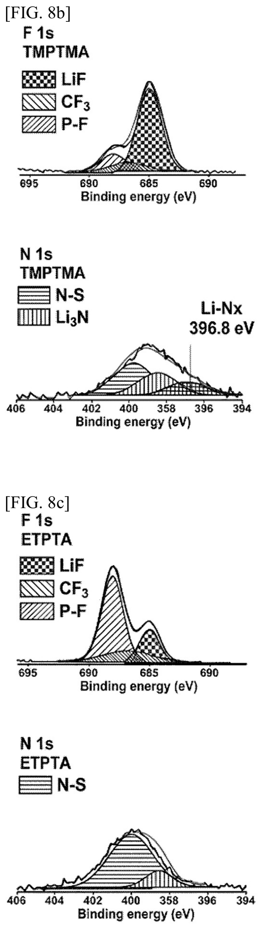

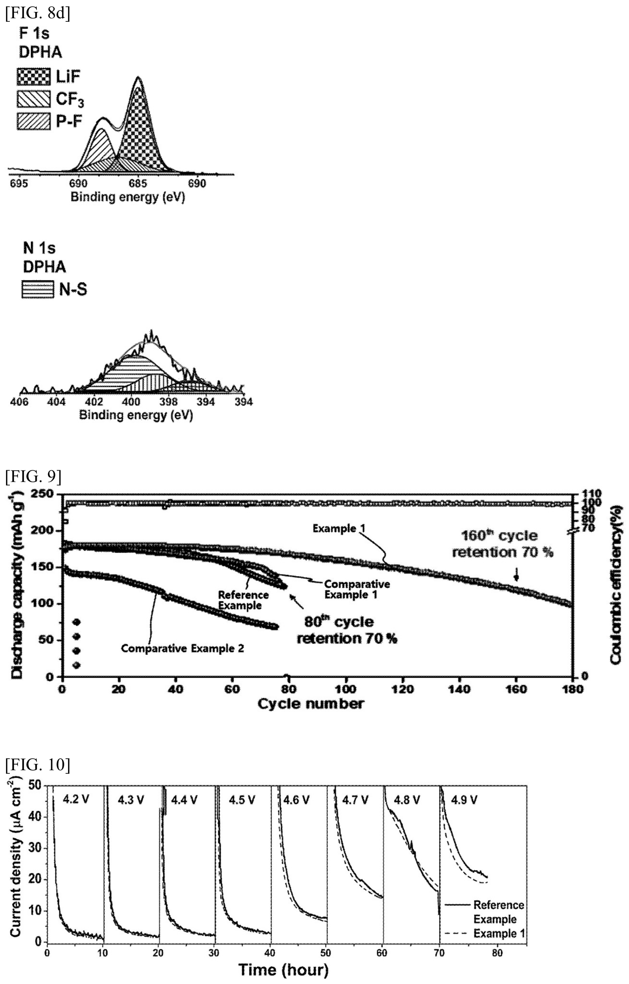

FIG. 8 illustrates F 1s and N 1s XPS analysis results of a lithium electrode surface obtained after 20 cycles of operation of lithium metal batteries using the electrolytes of the Reference Example, Comparative Examples 1 and 2, and Example 1. A K-alpha plus (Thermo Scientific, USA) was used as analytical equipment, and analysis conditions were as follows.
- X-ray: Al ka (1486.6 eV) 12 keV/6 mA
- Beam size: 400 µm
- Pass energy (eV)
- Survey scan: 200
- Narrow scan: 50
- Energy step size (eV)
- Survey scan: 1.0
- Narrow scan: 0.1
- Valence scan: 0.05
- Sputter condition (ETCH)
- Sputter time: 90 s
- Sputter ion gun (Ar⁺): 1 keV

### (Reference sputter rate (SiO₂ standard): 100 nm/1444 s)

FIG. 8(a) illustrates a spectrum of a lithium anode surface obtained from a lithium metal battery using the liquid electrolyte of the Reference Example. When compared with undecomposed anions in an F 1s spectrum, a degree of LiF component formation was relatively similar. In addition, in an N 1s spectrum, a small amount of Li₃N component was observed, originating from undecomposed anions.

FIG. 8(b) illustrates XPS spectra of an electrode obtained from a lithium metal battery using the gel polymer electrolyte of Comparative Example 1, and FIG. 8(d) illustrates XPS spectra of an electrode obtained from a lithium metal battery using the gel polymer electrolyte of Example 1. In these cases, F 1s analysis indicates that a LiF component may be formed in a significantly larger amount relative to undecomposed anions. In addition, in an N 1s spectrum, not only a Li₃N component but also additional inorganic film components, such as lithium nitrogen oxide (LiNₓO_{y}) having ionic conductivity, may be detected. These results indicate that application of gel polymer electrolytes of Example 1 and Comparative Example 1 may increase formation of an inorganic-based stable solid electrolyte interphase (SEI) layer on a lithium metal electrode surface.

On the other hand, in Comparative Example 2, a relatively high ether group content may make electrolyte aggregation difficult, and accordingly, a reduced amount of inorganic film formation may result in a relatively low surface inorganic component content. Therefore, a gel polymer electrolyte (of Example 1), which includes a relatively high content of acrylate functional groups, may be advantageous for forming a stable inorganic-based SEI layer on the lithium metal electrode surface.

### (7) Evaluation of Capacity Characteristics and Cycle Life Characteristics

FIG. 9 is a graph illustrating results of comparing cycle life characteristics of lithium-NCM batteries to which the lithium electrodes of the Reference Example, Comparative Examples 1 and 2, and Example 1 are applied. All lithium-NCM batteries had an identical cathode loading of 19.8 mg/cm², and charge and discharge tests were conducted at a current density of 0.33C during charging and 1.0C during discharging.

Referring to FIG. 9, Example 1 exhibits superior cycle life characteristics compared to the Reference Example and Comparative Examples 1 and 2. These results indicate that functional groups present in a polymer component of the gel polymer electrolyte used in Example 1 may influence composition of an anode surface film (SEI), thereby forming a more stable interfacial film and simultaneously enhancing lithium ionic conductive properties.

### (8) Evaluation of Oxidation Stability

FIG. 10 illustrates results of leakage current tests for evaluating oxidation stability of lithium-NCM batteries to which the lithium electrodes of the Reference Example and Example 1 were applied, depending on application of the electrolyte .

All lithium-NCM batteries had an identical cathode loading of 19.8 mg/cm², and a leakage current test was conducted as follows.

The batteries were charged to 4.2 V using a constant-current method, and a voltage was then increased by 0.1 V every 10 hours in a range from 4.2 V to 4.9 V, while a resulting current was measured.

As a result, as shown in FIG. 10, Example 1 exhibits significantly lower leakage oxidation current over an entire voltage range compared to the Reference Example. This may indicate that application of the gel polymer electrolyte of Example 1 results in an ion aggregation effect among polymer chains and lithium salt and solvent components within the electrolyte, thereby enhancing oxidation stability of the battery.

Accordingly, the gel polymer electrolyte of Example 1 may provide improved oxidation stability capable of maintaining stable electrochemical behavior even in a high-voltage region during operation of the lithium-NCM battery.

### (9) TEM Analysis

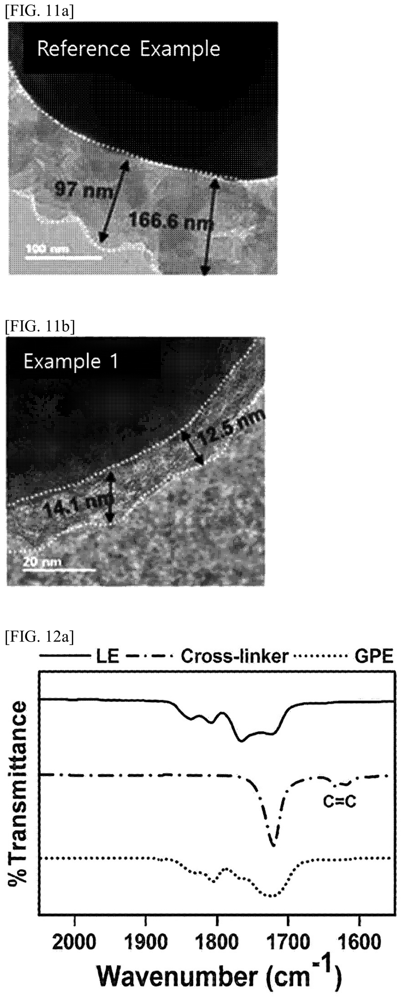

FIGS. 11a and 11b respectively illustrate TEM analysis results comparing thicknesses of films formed on cathode surfaces of lithium-NCM batteries to which the lithium electrodes of the Reference Example and Example 1 are applied, after 70 cycles of operation.

Both lithium-NCM batteries had an identical cathode loading of 19.8 mg/cm², and charge and discharge tests were performed at current densities of 0.33C during charging and 1.0C during discharging. After 70 cycles of operation, cathodes in a discharged state were collected and subjected to TEM image analysis.

FIG. 11a illustrates analysis results of a cathode surface of a battery using the liquid electrolyte of the Reference Example, in which a thickness of a byproduct layer formed on the surface was observed to be approximately 97 nm to 166 nm. In contrast, FIG. 11b illustrates analysis results of a cathode surface of a battery using the gel polymer electrolyte of Example 1, in which an amount of surface byproduct formation was significantly reduced.

These results may indicate that, when the gel polymer electrolyte of Example 1 is applied, side reactions between electrolyte components and an electrode are suppressed due to an ion aggregation phenomenon occurring within the electrolyte, thereby reducing decomposition byproducts formed on a cathode surface. Accordingly, the gel polymer electrolyte according to the Example may improve electrode surface stability during long-term operation of the lithium-NCM battery.

### (10) FT-IR Analysis of Electrolyte

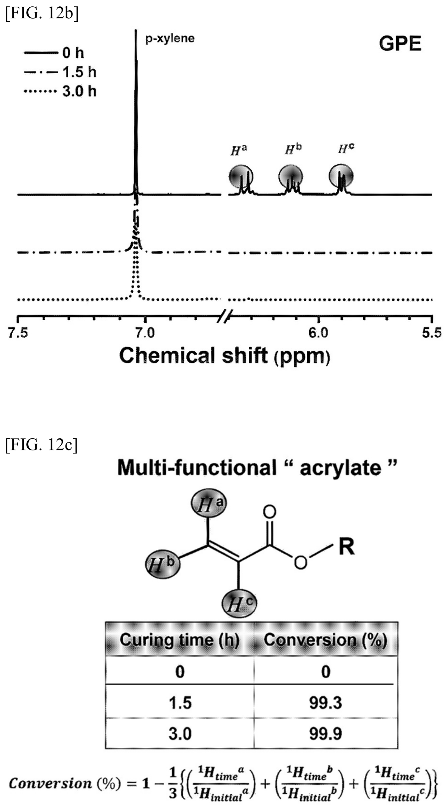

FIG. 12 illustrates results of analyzing chemical structural changes of the Reference Example, Example 1 (GPE), and dipentaerythritol hexaacrylate (DPHA).

Specifically, FIG. 12a illustrates FT-IR analysis results of the liquid electrolyte of the Reference Example (LE), the gel polymer electrolyte of Example 1, and dipentaerythritol hexaacrylate (DPHA, as a crosslinker).

In the Reference Example, no distinct absorption peak was observed around 1700 cm⁻¹, indicating a near absence of C=C double bonds. In contrast, it can be seen that dipentaerythritol hexaacrylate (DPHA) exhibited a strong absorption peak around 1700 cm⁻¹, indicating inclusion of C=C double bonds in dipentaerythritol hexaacrylate (DPHA). In the case of Example 1, an intensity of the peak around 1700 cm⁻¹ was reduced compared to dipentaerythritol hexaacrylate (DPHA), which may indicate that a crosslinking reaction proceeded and consumed C=C double bonds.

FIG. 12b illustrates NMR analysis results for the gel polymer electrolyte of Example 1. A decrease in intensity of specific hydrogen signals was observed over time (0 h → 3.0 h), which may indicate that corresponding functional groups reacted and diminished during a crosslinking reaction.

FIG. 12c illustrates a table showing conversion of a polyfunctional acrylate as a function of curing time. As shown in FIG. 12c, curing conversion was calculated using ¹H NMR integral values of vinyl hydrogens (H^{a}, H^{b}, H^{C}) of the polyfunctional acrylate. As a result of calculation, the conversion reached 99.3% after curing for 1.5 hours and 99.9% after curing for 3 hours, indicating that the crosslinking reaction may be substantially completed under these conditions.

### (11) Current Density Change Analysis

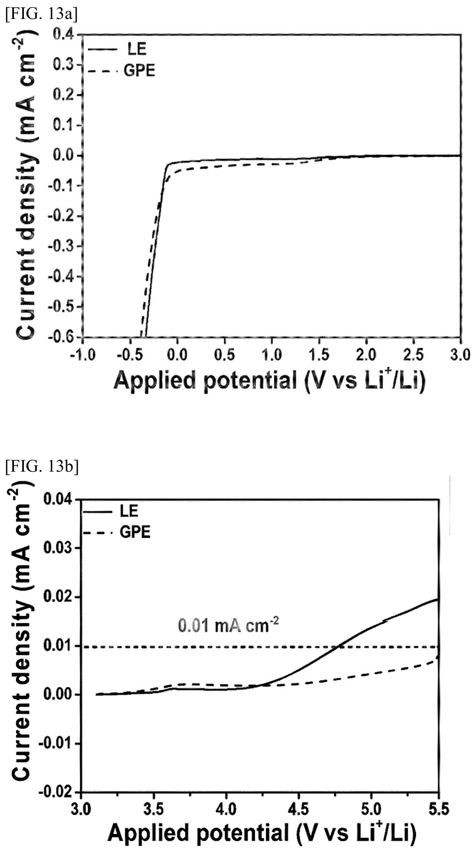

FIG. 13 is a graph illustrating analyzing changes in current density according to a voltage range for the Reference Example (LE) and Example 1 (GPE).

Referring to FIG. 13, Example 1 exhibits stable current density characteristics over a wider voltage range than the Reference Example. This may be interpreted as resulting from enhanced thermal and electrochemical stability of the gel polymer electrolyte due to a crosslinking reaction of the gel polymer electrolyte composition according to Example 1, and the gel polymer electrolyte according to the Examples may maintain improved stability even under high-voltage conditions.

### (12) XPS Analysis of Lithium Electrode Surface

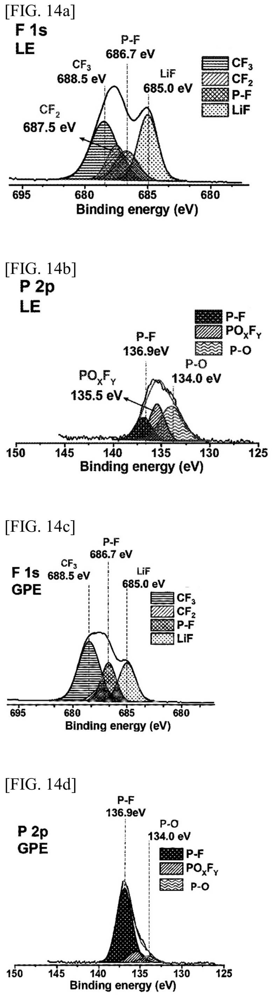

FIG. 14 illustrates XPS analysis results for lithium electrode surfaces of the Reference Example (LE) and Example 1 (GPE). Analysis conditions were the same as those described above in (6) XPS Analysis.

FIGS. 14(a) and 14(c) illustrate F 1s spectra, in which a LiF peak (≈ 685.0 eV) exhibits a noticeably higher intensity for the Reference Example than for Example 1. This may indicate that application of the electrolyte of the Reference Example results in increased LiF formation on a lithium surface due to decomposition of LiPF₆. In contrast, a LiF peak intensity for Example 1 (GPE) is relatively lower, which may indicate that a polymer matrix of the gel polymer electrolyte suppresses excessive LiF formation on the lithium surface.

FIGS. 14(b) and 14(d) illustrate P 2p spectra, in which P-F (≈ 136.9 eV) and POF (≈ 135.5 eV) peaks are weakly observed in the Reference Example, whereas a P-F bond peak is more strongly observed in Example 1. These results may indicate that, when a gel polymer electrolyte is applied, a P-F bond-based stable inorganic interfacial layer (SEI/CEI) formed by electrolyte decomposition may be more effectively developed.

Accordingly, the gel polymer electrolyte of Example 1 may suppress LiF accumulation while facilitating formation of a stable P-F-based interfacial layer, thereby enhancing chemical stability of an electrode-electrolyte interface.

### (13) Transmission Electron Microscope (TEM) Analysis of Cathode Film Thickness

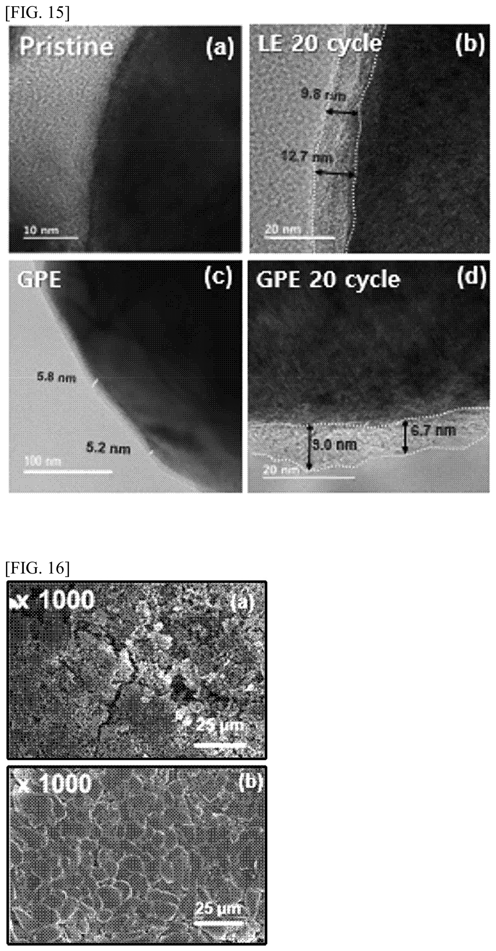

FIG. 15 is TEM images for analysis of cathode film thickness, in which (a) illustrates an initial state, (b) illustrates cathode film thickness after 20 cycles for the Reference Example, (c) illustrates an initial state for Example 1, and (d) illustrates cathode film thickness after 20 cycles for Example 1.

In the Reference Example, a cathode film may be formed in a relatively thick and non-uniform manner, whereas in Example 1, a stable cathode film may be formed from an initial stage, and a uniform and stable cathode film may be maintained even after 20 cycles.

### (14) SEM (Scanning Electron Microscope) Analysis

FIG. 16(a) illustrates an SEM image of the Reference Example, in which a surface may appear rough and non-uniform, with large cracks and agglomerates, whereas FIG. 16(b) illustrates an SEM image of Example 1 after 20 cycles, in which a surface may appear smooth and uniform.

### (15) Evaluation of Charge/Discharge Performance

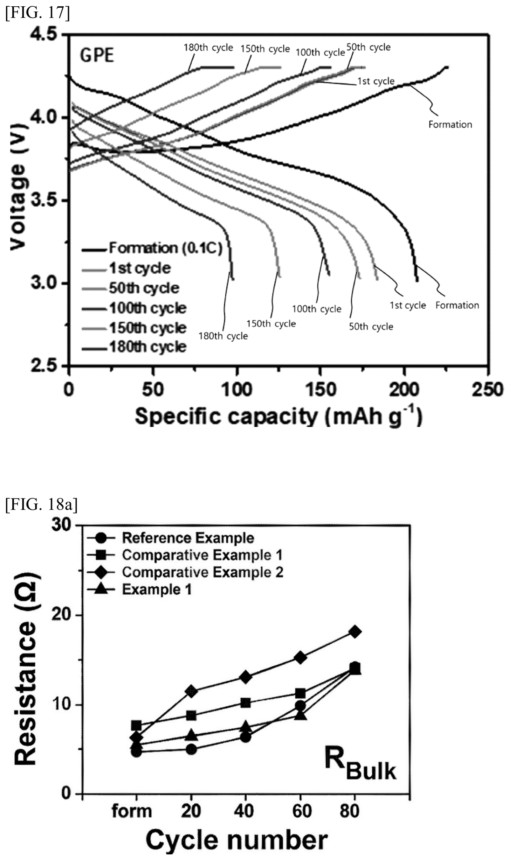

FIG. 17 is a graph illustrating charge/discharge performance of Example 1 as a function of cycle number. In an initial formation stage, high capacity and a stable operating voltage are exhibited, and although capacity decrease is observed as charge/discharge cycles progress, stable capacity retention with a low degradation rate may be maintained over long-term cycling. The evaluation results were measured under the following conditions. A CR2032-type coin cell was used, and a cathode including LiNi_{0.8}Co_{0.10}Mn_{0.1}O₂ (NCM811) coated on an aluminum current collector (loading: 29.2 mg; diameter: 14 mm) was employed. An amount of electrolyte corresponding to an E/C ratio of 3.6 g Ah⁻¹ was used to perform evaluation. A separator including a 9 µm polyethylene membrane was used, and a 20 µm lithium foil (diameter: 16 mm) was used as an anode. Using a galvanostatic evaluation method, a formation process at a charge/discharge rate of 0.1 C was performed within an operating voltage range of 3.0 V to 4.3 V, followed by an activation process at a charge/discharge rate of 0.33 C, and a main cycling test was conducted at a charge rate of 0.33 C and a discharge rate of 1.0 C. A WBCS 3000 system (WonATech) was used as evaluation equipment.

### (16) Analysis of Resistance Change

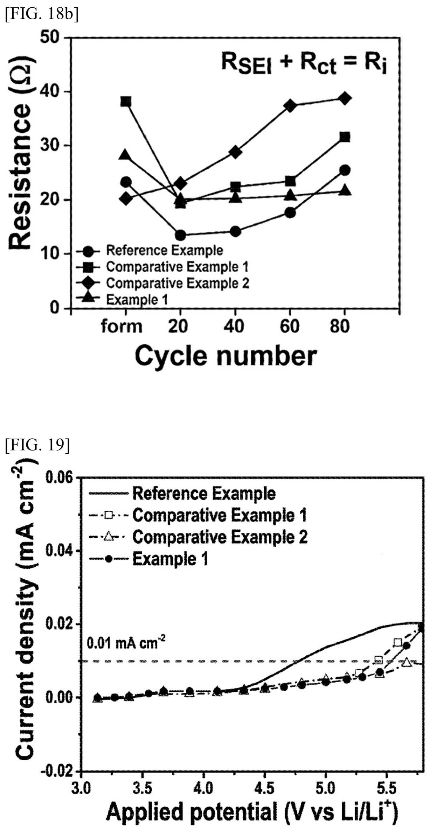

FIG. 18 illustrates results obtained by measuring resistance after operation for each cycle, in which measurements were performed at room temperature using a potentiostat under a frequency range of 1.0 mHz to 1.0 MHz and an amplitude of 5 mV. FIG. 18(a) illustrates bulk resistance (R_{bulk}) as a function of cycle number for Example 1, Comparative Example 1 (TMPTMA GPE), Comparative Example 2 (ETPTA GPE), and the Reference Example, and FIG. 18(b) illustrates changes in resistance of a solid electrolyte interphase layer (R_{SEI}) and charge transfer resistance (R_{ct}). FIG. 18(a) represents total bulk resistance generated when current flows within a battery. Example 1, Comparative Example 1, and the Reference Example exhibit relatively small differences in initial bulk resistance, whereas Comparative Example 2 exhibits a larger increase in bulk resistance as the number of cycles increases. This may be interpreted as resulting from relatively low lithium ionic conductive properties and high activation energy. FIG. 18(b) illustrates changes in charge transfer resistance (R_{ct}). The Reference Example exhibits low initial resistance; however, resistance increases rapidly as cycling progresses, whereas Example 1 maintains a substantially constant resistance from an initial stage, indicating stable interfacial characteristics. In contrast, batteries to which the polymer electrolytes of Comparative Examples 1 and 2 are applied, which use other crosslinking agents having relatively inferior electrochemical properties, exhibit a significant increase in resistance with repeated cycling, which may be attributed to degradation of interfacial film properties or reduced charge transfer characteristics.

### (17) Analysis of Mesh Size of Gel Polymer Electrolytes

FIG. 4 illustrates results of deriving and comparing mesh size values of gel polymer electrolytes of Comparative Examples 1 and 2 and Example 1, in which diffusion coefficients were measured using a light-scattering multipoint analysis function of a zeta potential analyzer (ELSZneo, Otsuka, Korea). Mesh size values of each gel polymer were derived by applying a Stokes-Einstein equation, which relates a Brownian motion particle size to a diffusion coefficient. After obtaining an average value (D, m²/s) of diffusion coefficients measured through multipoint analysis, an effective radius (r, m) of a gel polymer network was derived according to Equation 4 (Stokes-Einstein equation) by substituting values satisfying conditions including a Boltzmann constant, temperature, and viscosity. [Equation 4] $D = \frac{{k}_{B} T}{6 πηr}$

In Equation 4, k_{B} denotes a Boltzmann constant (1.380649 × 10⁻²³ J/K), T denotes an absolute temperature (K), and η denotes a solvent viscosity (Pa·s).

For evaluation, a volume of 2 mL of a precursor of each gel polymer electrolyte was added to a 5 mL rectangular quartz cell, and a thermal crosslinking reaction was performed at 70 °C for 3 hours, followed by measurement. With respect to a measurement range, measurements were performed three times at intervals of 0.5 mm along a z-axis based on an x-axis length of 5.0 mm, and a diffusion coefficient was derived as an average value of respective results. Referring to FIG. 4, (a) corresponds to Comparative Example 1, (b) corresponds to Comparative Example 2, and (c) corresponds to Example 1, and gel polymer electrolytes using different crosslinking agents exhibit a tendency to have a larger mesh size as a crosslinking agent having a larger molecular weight is used. This may be attributed to a difference in distance between a crosslinking point and a center of the crosslinking agent, and an increase in gel polymer mesh size may contribute to enhanced ionic conductivity when a gel polymer is applied as an electrolyte. In addition, multipoint analysis results indicate that similar diffusion coefficient values are observed within an error range regardless of measurement position during formation of the gel polymer electrolyte, and such similarity of diffusion coefficients within the same gel polymer electrolyte may suggest the secured uniformity of the gel polymer electrolyte.

### (18) Comparative Analysis of Gel Polymer Electrolyte Glass Transition Temperatures

FIG. 4 illustrates results of measuring glass transition temperatures (Tg) of gel polymer components of (g) Comparative Example 1, (h) Comparative Example 2, and (i) Example 1. A DSC 2500 (TA Instruments, Korea) was used as analytical equipment, and analysis conditions were as follows: Equilibrate at -80.00 °C; isothermal for 5.0 min; ramp at 10.00 °C/min to 400.00 °C; equilibrate at -80.00 °C; isothermal for 5.0 min; ramp at 10.00 °C/min to 400.00 °C. In FIG. 4, in the case of (g) including only acrylate groups, a Tg of the polymer appears at 79.4 °C, which is higher than room temperature, whereas in the cases of polymers including ether groups, (h) and (i) exhibit Tg values of -59.9 °C and -33.4 °C, respectively, indicating differences in physical properties of the polymers. These results may be interpreted as reflecting differences in polymer chain flexibility depending on the number or composition of functional groups, and may be correlated with differences in ionic conductive properties when gel polymerization is applied.

### (19) Comparative Analysis of Oxidation Stability of Liquid Electrolytes and Gel Polymer Electrolytes

The oxidation stability shown in FIG. 19 was measured using electrochemical linear sweep voltammetry (LSV).

80 µL of the gel polymer electrolytes according to Example 1, Comparative Examples 1 and 2, and the Reference Example were loaded onto a polyethylene (PE) separator. A stainless steel (SUS, Type 304) substrate was used as a working electrode, and a lithium anode was used as both a counter electrode and a reference electrode. After contacting electrodes on both sides of a sample, a voltage was applied unidirectionally in an oxidation direction, and a current change was analyzed (voltage range: 3.0 V to 6.0 V; scan rate: 1.0 mV/s). Based on LSV results, oxidation stability was evaluated using a criterion of a current density of 0.01 mA cm⁻².

### (20) Evaluation of Electrolyte Compatibility Using Lithium Symmetric Cell

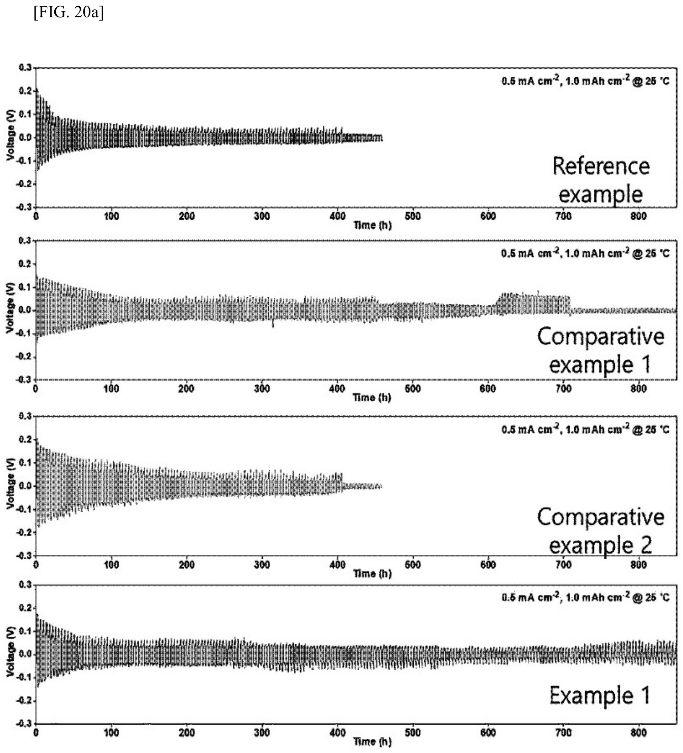

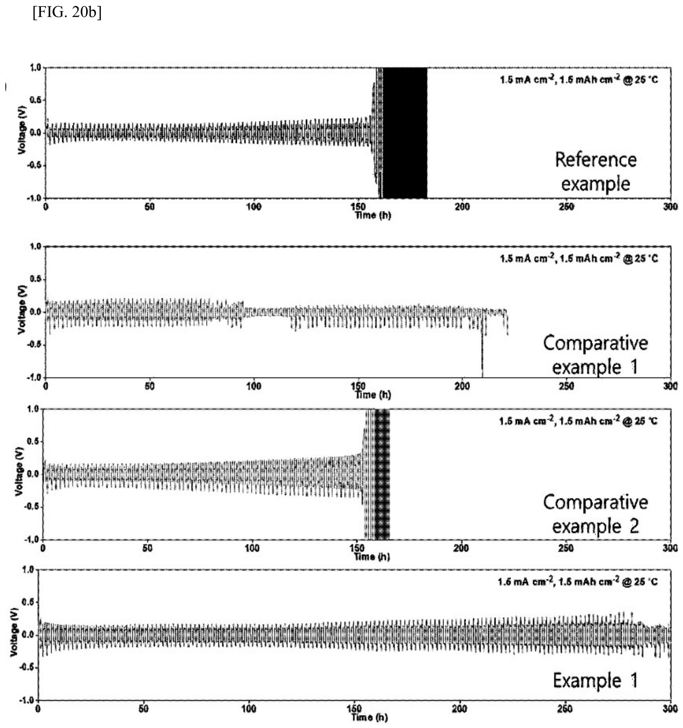

FIG. 20 illustrates an evaluation method using a lithium/lithium symmetric cell, in which lithium metal electrodes are used as both electrodes, and specific current densities and areal capacities are applied to observe lithium plating/stripping stability and overvoltage variations resulting from side reactions between the electrolyte and the electrodes.

80 µL of the gel polymer electrolytes according to Example 1, Comparative Examples 1 and 2, and the Reference Example were loaded onto a polyethylene (PE) separator, and the separator was laminated between two lithium metal electrodes to form a symmetric cell. Voltage changes were analyzed by applying predetermined current densities and areal capacities through the electrodes on both sides of the sample. FIG. 20(a) illustrates results evaluated at a current density of 0.5 mA cm⁻² and an areal capacity of 1.0 mAh cm⁻², and FIG. 20(b) illustrates results evaluated at a current density of 1.5 mA cm⁻² and an areal capacity of 1.5 mAh cm⁻². A WBCS 3000 system (WonATech) was used as evaluation equipment.

## Claims

1. A gel polymer electrolyte composition for lithium metal batteries comprising:
a compound including one or more ether groups and four or more acrylate groups;
a fluorinated organic solvent; and
a lithium salt.

2. The gel polymer electrolyte composition for lithium metal batteries according to claim 1, wherein the compound including one or more ether groups and four or more acrylate groups includes at least one of dipentaerythritol hexaacrylate (DPHA) and dipentaerythritol pentaacrylate (DPPA).

3. The gel polymer electrolyte composition for lithium metal batteries according to claim 1 or 2, wherein the fluorinated organic solvent includes at least one selected from the group consisting of fluoroethylene carbonate (FEC), methyl-2,2,2-trifluoroethyl carbonate (FEMC), trifluorotoluene (TFT), 1,1,2,2-tetrafluoroethyl 2,2,3,3-tetrafluoropropyl ether (TTE), and difluorobenzene (DFB).

4. The gel polymer electrolyte composition for lithium metal batteries according to any one of claims 1 to 3, further comprising a non-fluorinated linear carbonate compound.

5. The gel polymer electrolyte composition for lithium metal batteries according to any one of claims 1 to 4, further comprising ethyl methyl carbonate (EMC).

6. The gel polymer electrolyte composition for lithium metal batteries according to any one of claims 1 to 5, wherein the lithium salt includes one or more anionic lithium salts including a nitrogen element.

7. The gel polymer electrolyte composition for lithium metal batteries according to any one of claims 1 to 6, wherein the lithium salt includes lithium bistrifluoromethanesulfonylimide (LiTFSI) and lithium difluoro(bisoxalato)phosphate (LiDFBP).

8. The gel polymer electrolyte composition for lithium metal batteries according to claim 7, wherein a molar ratio of lithium bistrifluoromethanesulfonylimide (LiTFSI) to lithium difluoro(bisoxalato)phosphate (LiDFBP) is 9:1 to 5:5.

9. The gel polymer electrolyte composition for lithium metal batteries according to any one of claims 1 to 8, wherein the lithium salt further comprises at least one selected from the group consisting of lithium nitrate (LiNO₃), lithium bisfluorosulfonylimide (LiFSI), lithium difluorooxalatoborate (LiDFOB), lithium bisoxalatoborate (LiBOB), lithium hexafluorophosphate (LiPF₆), lithium tetrafluoroborate (LiBF₄), and lithium perchlorate (LiClO₄).

10. The gel polymer electrolyte composition for lithium metal batteries according to any one of claims 1 to 9, wherein the content of the compound including one or more ether groups and four or more acrylate groups is 5% by weight or less, based on the total weight of the gel polymer electrolyte composition for lithium metal batteries.

11. The gel polymer electrolyte composition for lithium metal batteries according to any one of claims 1 to 10, wherein the content of the compound including one or more ether groups and four or more acrylate groups is 1.0% by weight or more, based on the total weight of the gel polymer electrolyte composition for lithium metal batteries.

12. The gel polymer electrolyte composition for lithium metal batteries according to any one of claims 1 to 11, wherein the content of the fluorinated organic solvent is 50% by weight to 95% by weight, based on the total weight of the gel polymer electrolyte composition for lithium metal batteries.

13. The gel polymer electrolyte composition for lithium metal batteries according to any one of claims 1 to 12, wherein the content of the lithium salt is 15% by weight to 30% by weight, based on the total weight of the gel polymer electrolyte composition for lithium metal batteries.

14. A gel polymer electrolyte for lithium metal batteries comprising a compound including one or more ether groups and four or more acrylate groups.

15. A lithium metal battery comprising:
a lithium anode (130);
a cathode (100) disposed opposite the anode; and
the gel polymer electrolyte (140) for lithium metal batteries according to claim 14, wherein the gel polymer electrolyte (140) is disposed between the anode (130) and the cathode (100).
